(19) Europäisches Patentamt
European Patent Office
Office européen des brevets

(11) Veröffentlichungsnummer: **0 479 192 A2**

(12) **EUROPÄISCHE PATENTANMELDUNG**

(21) Anmeldenummer: **91116661.9**

(22) Anmeldetag: **30.09.91**

(51) Int. Cl.[5]: **C08L 63/00**, C08L 71/00, C08G 65/40, C08G 65/48, C08G 59/62

(30) Priorität: **02.10.90 CH 3207/90**

(43) Veröffentlichungstag der Anmeldung: **08.04.92 Patentblatt 92/15**

(84) Benannte Vertragsstaaten: **DE ES FR GB IT NL SE**

(71) Anmelder: **CIBA-GEIGY AG**
**Klybeckstrasse 141**
**CH-4002 Basel(CH)**

(72) Erfinder: **Hoffmann, Kurt, Dr.**
**Heidenbergstrasse 15**
**W-6147 Lautertal 2(DE)**
Erfinder: **Kainmüller, Thomas, Dr.**
**Am Kümmelberg 1**
**W-6145 Lindenfels 1(DE)**
Erfinder: **Pfaendner, Rudolf, Dr.**
**Sackgasse 3**
**W-6149 Rimbach/Odenwald 1(DE)**

(74) Vertreter: **Zumstein, Fritz, Dr. et al**
**Bräuhausstrasse 4**
**W-8000 München 2(DE)**

(54) **Modifizierte Polyarylenether-Blockcopolymere.**

(57) In organischem Lösungsmittel lösliche, mit Di- und Triglycidylverbindungen modifizierte Polyarylenether-Blockcopolymere werden erhalten, indem man

(a) 5-95 Gew.-% hydroxylgruppenterminierter Polyarylenether mit einem Mn von 1000-60000 und der Formel Ia

$$HO-Ar_1-O \left( Ar_2-O-Ar_1-O \right)_x Ar_2-O-Ar_1-OH \qquad (Ia),$$

worin $Ar_1$ und $Ar_2$ unabhängig voneinander je einen zweiwertigen carbocyclisch-aromatischen Rest bedeuten und x für eine Zahl von 4 bis 250 steht, und

(b) 95-5 Gew.-% von (a) verschiedener hydroxylgruppenterminierter Polyarylenether mit einem Mn von 1000 bis 60000 und der Formel II

$$HO-Ar_3-O \left( Ar_4-O-Ar_3-O \right)_y Ar_4-O-Ar_3-OH \qquad (IIa),$$

worin $Ar_3$ und $Ar_4$ unabhängig je einen zweiwertigen carbocyclisch-aromatischen Rest bedeuten und y fur eine Zahl von 4 bis 250 steht, mit

(c) 0,2 bis 10 Gew.-% einer oder mehrerer Glycidylverbindungen umsetzt.

Die so modifizierten Polyarylenether-Blockcopolymeren bilden in organischen Lösungsmitteln stabile Lösungen und eignen sich zum Modifizieren von thermoplastischen und duromeren Matrixharzen.

EP 0 479 192 A2

Die Erfindung betrifft neue, mit Di-oder Triglycidylverbindungen modifizierte Polyarylenether-Blockcopolymere, ein Verfahren zu deren Herstellung und organische Lösungen, enthaltend diese neuen Polyarylenether-Blockcopolymeren.

Polyarylenether, wie beispielsweise Polylenethersulfone, sind technische Werkstoffe mit sehr guten mechanischen Eigenschaften, die jedoch in herkömmlichen organischen Lösungsmitteln nur unzureichende Lösungseigenschaften besitzen. Beispiele für solche Polyarylenethersulfone sind die im Handel erhältlichen Produkte Victrex® PES der Firma ICI und Ultrason® E der Firma BASF.

Lösungen solcher Polyarylenether sind insbesondere in chlorierten Kohlenwasserstoffen nicht stabil. Für verschiedene Anwendungen ist jedoch eine gute Lösungsstabilität des Polymeren in organischen Lösungsmitteln erwünscht. So wird beispielsweise bei der Modifizierung von duromeren Matrixharzen mit Polyarylenethern im allgemeinen mit möglichst konzentrierten Lösungen dieser Polymeren in herkömmlichen organischen Lösungsmitteln gearbeitet.

Aus der US-A-3,875,103 ist eine Beschichtungslösung für Polyarylenethersulfone bekannt. Die Lösung erfordert ausgewählte Lösungsmittel und ein ausgewähltes Mischungsverhältnis der Komponenten.

Aus der US-A-4,275,186 sind Polyarylenether bekannt, die durch Kettenverlängerung von oligomeren, hydroxylterminierten Polyarylenethern mit im wesentlichen äquimolaren Mengen von difunktionellen Kupplungskomponenten, unter anderem auch Diglycidylethern, erhältlich sind. Die beschriebenen mit Diglycidylethern modifizierten Produkte weisen eine gegenüber dem unmodifizierten Polyethersulfon deutlich herabgesetzte Glasumwandlungstemperatur auf. Eine Verringerung der Glasumwandlungstemperaturen ist im allgemeinen nicht erwünscht, da dadurch die Gebrauchstemperaturen des Polymerwerkstoffes herabgesetzt werden.

Aus der FR-A-2,547,304 sind mit Polysiloxanen modifizierte Polyarylenethersulfone bekannt. Der Gewichtsanteil an Siloxanresten beträgt im allgemeinen mehr als 10%, bezogen auf das Polymere. Die Siloxanreste in diesen Copolymeren bewirken im Vergleich mit den entsprechenden unmodifizierten Polyarylenethersulfonen eine erhebliche Verringerung der Glasumwandlungstemperatur.

Die Herstellung von Polyarylenether-Blockcopolymeren ist an sich bekannt. So wird beispielsweise in der DE-A-3 602 090 die Synthese von Blockcopolymeren, die Sulfon-und Ketogruppen enthalten, beschrieben. Gemäss Beispiel 8 dieser Literaturstelle wird in einer ersten Stufe durch Polykondensation von 4,4'-Dichlordiphenylsulfon und 4,4'-Dihydroxydiphenylsulfon in Gegenwart von $K_2CO_3$ ein amorpher Polyarylenethersulfon-Block hergestellt und in einer zweiten Stufe an die Kettenenden ein Polyetherketonblock, aufgebaut aus 4,4'-Difluorbenzophenon und Hydrochinon, anpolykondensiert. Die ursprüngliche Blocklänge bleibt bei den bekannten Syntheseverfahren aufgrund einer durch das Herstellungsverfahren bedingten Randomisierungsreaktion nicht erhalten.

Es wurde nun gefunden, dass man durch Umsetzung von mindestens zwei voneinander verschiedenen niedermolekularen Polyarylenethern mit Di-oder Triglycidylverbindungen in kleiner als äquivalenten Mengen modifizierte Polyarylenether-Blockcopolymere erhält, die sich durch eine gute Löslichkeit in einer Reihe von organischen Lösungsmitteln auszeichnen, mit denen sich Lösungen mit verbesserter Lagerstabilität herstellen lassen und die im Vergleich mit den entsprechenden unmodifizierten Polyarylenethern praktisch keine Verminderung der Glasumwandlungstemperatur aufweisen. Im Gegensatz zu den bekannten Syntheseverfahren bleibt bei diesem Verfahren die ursprüngliche Blocklänge erhalten.

Gegenstand vorliegender Erfindung sind somit mit Di- oder Triglycidylverbindungen modifizierte Polyarylenether-Blockcopolymere mit einer reduzierten Viskosität von 0,2 bis 1,8 dl/g, gemessen an einer 1 %igen Lösung in Dimethylformamid, enthaltend

(a) 5-95 Gew.-% Polyarylenether-Blöcke mit numerischen Molekulargewichten (Mn) von 1000-60000 und gleichen oder verschiedenen wiederkehrenden Struktureinheiten der Formel I

$-Ar_1-O-Ar_2-O-$ (I),

(b) 95-5 Gew.-% von (a) verschiedener Polyarylenether-Blöcke mit Mn von 1000-60000 und gleichen, verschiedenen oder gleichen und verschiedenen wiederkehrenden Struktureinheiten der Formel II

$-Ar_3-O-Ar_4-O-$ (II) und

(c) 0,2-10 Gew.-% gleicher oder verschiedener Struktureinheiten der Formel III, IV oder V

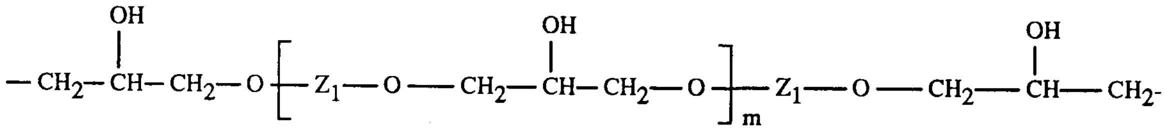

(III),

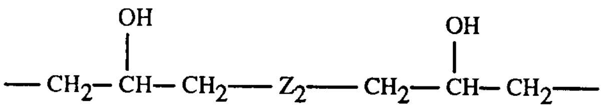

(IV) oder

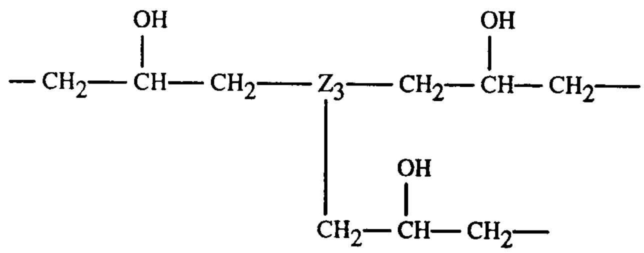

(V),

worin $Ar_1$, $Ar_2$, $Ar_3$ und $Ar_4$ unabhängig voneinander je einen zweiwertigen carbocyclisch-aromatischen Rest bedeuten, $Z_1$ ein zweiwertiger Rest einer cycloaliphatischen, aromatischen oder araliphatischen Dihydroxyverbindung nach dem Entfernen der beiden Hydroxylgruppen ist, m Null oder eine Zahl von 1 bis etwa 10 bedeutet,$Z_2$ ein zweiwertiger Rest einer cycloaliphatischen, aromatischen oder araliphatischen disekundären Aminoverbindung nach dem Entfernen der beiden N-Wasserstoffatome ist, und $Z_3$ einen dreiwertigen Rest einer cycloaliphatischen, aromatischen oder araliphatischen Verbindung mit Hydroxy- und/oder Aminogruppen nach dem Entfernen der Hydroxy- und/oder Aminowasserstoffatome darstellt, wobei die Reste $Ar_1$, $Ar_2$, $Ar_3$, $Ar_4$, $Z_1$, $Z_2$ und $Z_3$ unsubstituiert oder mit ein bis vier $C_1$-$C_6$-Alkylgruppen, $C_3$-$C_{10}$-Alkenylgruppen, Phenylgruppen oder Halogenatomen substituiert sein können und in den Resten $Z_1$, $Z_2$ und $Z_3$ ein, zwei, drei oder vier Ringkohlenstoffatome durch Sauerstoff-, Schwefel- und/oder Stickstoffatome ersetzt sein können und wobei die Summe der Polyarylenether-Blöcke (a) und (b) und der Struktureinheiten (c) zusammen 100 Gew.-% beträgt.

Die reduzierte Viskosität der erfindungsgemässen Polymeren erstreckt sich über einen Bereich von 0,2 bis etwa 1,8 dl/g. Dies entspricht einem numerischen Molekulargewicht (Zahlenmittel) von etwa 5'000 bis etwa 150'000. Bevorzugt werden Polymere mit einem Mn von 10'000 bis 80'000.

Unter dem Begriff "Polyarylenether-Blöcke mit verschiedenen wiederkehrenden Struktureinheiten" sollen sowohl solche aus mindestens zwei voneinander verschiedenen niedermolekularen Polyarylenethern als auch Polyarylenetherblöcke mit verschiedenen wiederkehrenden Struktureinheiten innerhalb der Polymerkette verstanden sein. Beispielsweise können Polyarylenetherblöcke mit verschiedenen wiederkehrenden Struktureinheiten durch Umsetzung eines Gemisches enthaltend mindestens zwei voneinander verschiedene Polyarylenether, wie zum Beispiel aus 4,4'-Dihydroxydiphenylsulfon und 4,4'-Dichlordiphenylsulfon ( = Polyarylenether A) sowie aus 4,4'-Dihydroxybenzophenon und 4,4'-Dichlordiphenylsulfon, mit der entsprechenden Glycidylverbindung erhalten werden. Andererseits könne Polyarylenetherblöcke mit verschiedenen wiederkehrenden Struktureinheiten auch dadurch erhalten werden, indem man beispielsweise einen Teil des bei der Herstellung von Polyarylenether A eingesetzten 4,4'-Dihydroxydiphenylsulfons durch 4,4'-Dihydroxybenzophenon ersetzt. Der auf diese Weise erhaltene Polyarylenether A' weist in der Polymerkette verschiedene wiederkehrende Struktureinheitenin statistischer Verteilung auf. Zur Herstellung der erfindungsgemässen Polyarylenether-Blockcopolymere können auch mehr als nur zwei voneinander verschiedene Polyarylenether oder ein Polyarylenether mit mehr als zwei voneinander verschiedenen wiederkehrenden Struktureinheiten in der Polymerkette verwendet werden.

Enthalten die Reste $Ar_1$ bis $Ar_4$ und $Z_1$ bis $Z_3$ ein $C_1$-$C_6$-Alkyl, so handelt es sich um verzweigte oder insbesondere um geradkettige Reste. Bevorzugt sind geradkettige Alkylreste mit ein bis drei Kohlenstoffatomen, insbesondere Methyl.

Beispiele für Alkylreste sind Methyl, Ethyl, n-Propyl, Isopropyl, n-Butyl, sek.-Butyl, n-Pentyl und n-Hexyl.

Bedeuten irgendwelche Reste $C_3$-$C_{10}$-Alkenyl, so handelt es sich dabei um verzweigte oder insbesondere um geradkettige Reste.

Beispiele für Alkenylreste sind Propenyl, Allyl oder Methallyl.

Bedeuten irgendwelche Reste Halogen, so handelt es sich dabei im allgemeinen um Fluor, Jod oder insbesondere um Chlor oder um Brom.

Bedeuten irgendwelche Reste zweiwertige carbocyclisch-aromatische Reste oder zweiwertige Reste einer aromatischen disekundären Aminoverbindung nach dem Entfernen der beiden Aminwasserstoffatome oder dreiwertige Reste einer aromatischen Verbindung mit Hydroxy- und/oder Aminogruppen nach dem Entfernen der Hydroxy- und/oder Aminwasserstoffatome, so handelt es sich dabei in der Regel um aromatische Kohlenwasserstoffreste mit sechs bis vierzehn Ringkohlenstoffatomen, die gegebenenfalls mit den oben angegebenen Resten substituiert sind. Mehrkernige aromatische Reste können als kondensierte Systeme vorliegen oder mehrere aromatische Systeme, wie Phenylenreste, sind über eine direkte Bindung oder über Brückenglieder, wie eine -O-, -S-,-SO-, - $SO_2$-, -CO-, -$CH_2$-, -$C(CH_3)_2$-, -$C(C_6H_5)_2$-, -$C(CH_3)(C_6H_5)$- oder -$C(CF_3)_2$- Gruppe, miteinander verknüpft.

Beispiele für solche aromatische Kohlenwasserstoffreste sind Phenylen, Naphthylen, Biphenylen und zwei, drei oder vier über Brückenglieder miteinander verknüpfte Phenylenreste.

Die aromatischen Kohlenwasserstoffreste sind in der Regel unsubstituiert. Sie können aber ihrerseits auch ein bis vier Substituenten tragen, wie $C_1$-$C_6$-Alkylgruppen, Halogenatome oder bevorzugt $C_3$-$C_{10}$-Alkenylgruppen.

Ist $Z_1$ ein zweiwertiger Rest einer cycloaliphatischen Dihydroxyverbindung nach dem Entfernen der beiden Hydroxylgruppen oder $Z_2$ ein zweiwertiger Rest einer cycloaliphatischen disekundären Aminoverbindung nach dem Entfernen der beiden Aminwasserstoffatome oder $Z_3$ ein dreiwertiger cycloaliphatischer Rest einer Verbindung mit Hydroxy-und/oder Aminogruppen nach dem Entfernen der Hydroxy- und/oder Aminwasserstoffatome, so handelt es sich dabei in der Regel um Cycloalkylengruppen mit fünf oder sechs Ringkohlenstoffatomen, die gegebenenfalls mit den oben angegebenen Resten substituiert sind und/oder die gegebenenfalls Teil einer Alkylenkette sein können.

Beispiele für Cycloalkylenreste sind Cyclopentylen, Cyclohexylen, Methylcyclohexylen, 1,4-Bismethylen-cyclohexan und 4,4'-Methylen-bis-(cyclohex-1-yl).

Ein Beispiel für einen araliphatischen Rest ist der Xylylenrest.

In den cyclischen Resten $Z_1$, $Z_2$ und/oder $Z_3$ können auch ein bis vier Ringkohlenstoffatome durch Sauerstoff-, Schwefel- und/oder Stickstoffatome ersetzt sein. Dabei kann es sich um aromatische oder nicht aromatische heterocyclische Systeme handeln, die vorzugsweise fünf- oder sechsgliedrig sind. Vorzugsweise sind ein bis drei Ringkohlenstoffatome durch Stickstoffatome oder ein oder zwei Ringkohlenstoffatome durch Sauerstoff-oder Schwefelatome ersetzt. Es können auch unterschiedliche Heteroatome in einem Ring auftreten, beispielsweise ein Stickstoff- und ein Sauerstoffatom.

Insbesondere bei $Z_2$ kann es sich bei den Heteroatomen um in das Ringsystem eingebundene sekundäre Aminogruppen handeln. Beispiele dafür werden weiter unten aufgeführt.

$Ar_1$ und $Ar_3$ bedeuten vorzugsweise unabhängig voneinander je ein Rest der Formeln VIa bis VIh

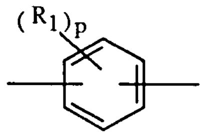 (VIa), 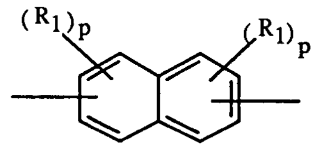 (VIb),

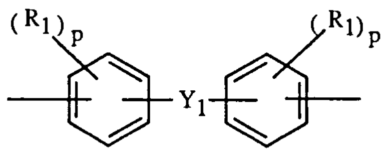 (VIc),

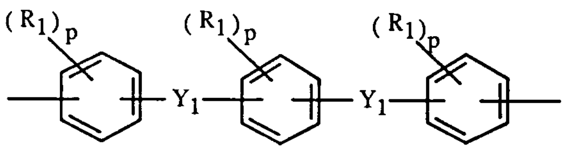 (VId),

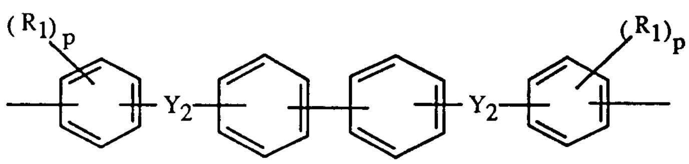 (VIe),

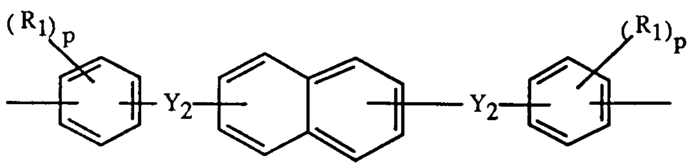 (VIf),

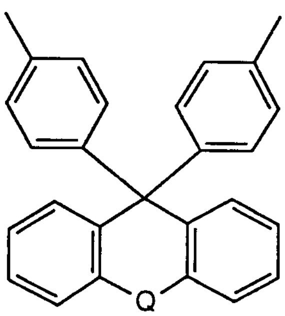 (VIg) oder 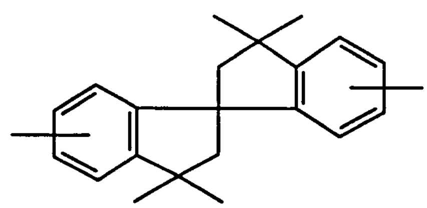 (VIh),

worin $R_1$ ein $C_1$-$C_6$-Alkyl, $C_3$-$C_{10}$-Alkenyl, Phenyl oder Halogen bedeutet, p eine ganze Zahl von Null bis 4 ist, $Y_1$ eine direkte Bindung, $-SO_2-$, -CO-, -S-, -SO-, $-CH_2-$, $-C(CH_3)_2-$, $-C(C_6H_5)_2-$, $-C(CH_3)(C_6H_5)-$ oder $-C(CF_3)_2-$ ist, $Y_2$ -CO-, $-SO_2-$oder -S- ist und Q für $-CH_2-$, -O-, -CO- oder eine direkte Bindung steht.

Insbesondere bedeuten $Ar_1$ und $Ar_3$ unabhängig voneinander je einen Rest der Formeln

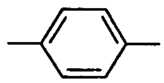, 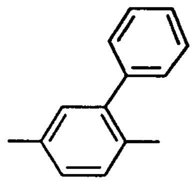, 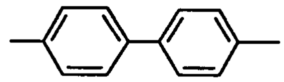, 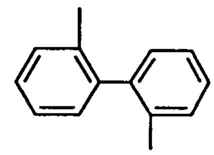,

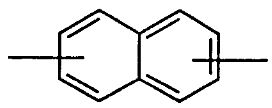, 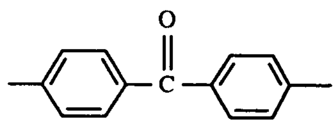, 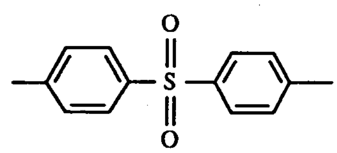,

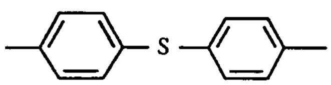, 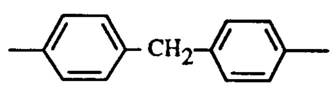, 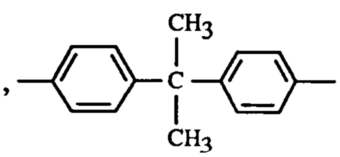 oder

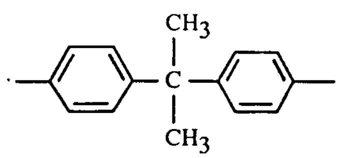.

In den besonders bevorzugten erfindungsgemässen Polyarylenether-Blockcopolymeren bedeuten $Ar_1$ und $Ar_3$ unabhängig voneinander je einen Rest der Formel

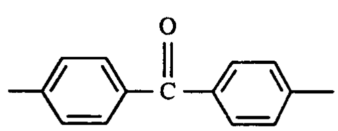, 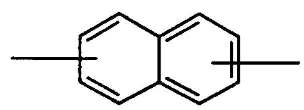 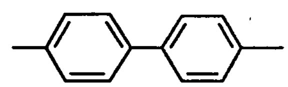,

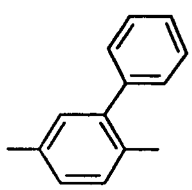, 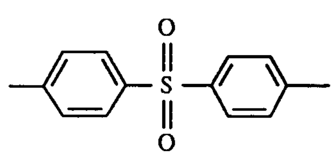, 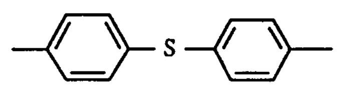 oder

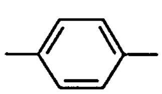.

$Ar_2$ und $Ar_4$ bedeuten bevorzugt unabhängig voneinander je einen Rest der Formeln VIi-VIn

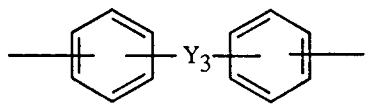 (VIi),

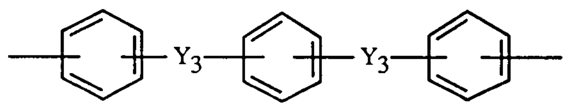 (VIk),

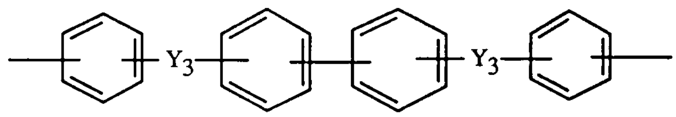 (VIl),

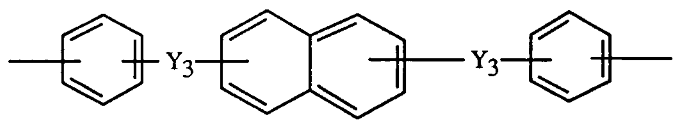 (VIm) oder

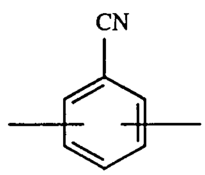 (VIn),

worin $Y_3$ -CO-, $-SO_2-$ oder -SO- ist.

Besonders bevorzugt bedeuten $Ar_2$ und $Ar_4$ unabhängig je einen Rest der Formeln

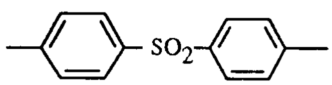 oder 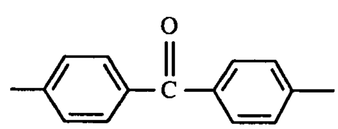 .

Ganz besonders bevorzugt bedeuten $Ar_2$ und $Ar_4$ einen Rest der Formel

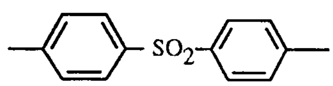 .

Vorzugsweise ist $Z_1$ ein Rest der Formeln VIIa bis VIIi;

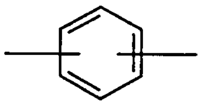 (VIIa), 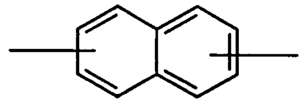 (VIIb),

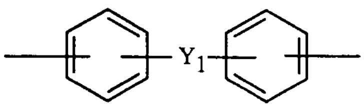 (VIIc), 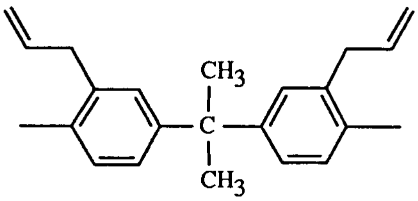 (VIId),

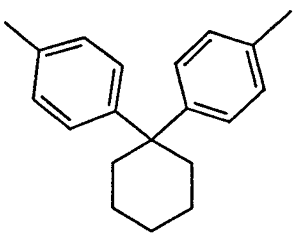 (VIIe), 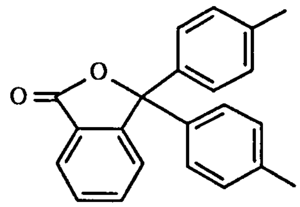 (VIIf),

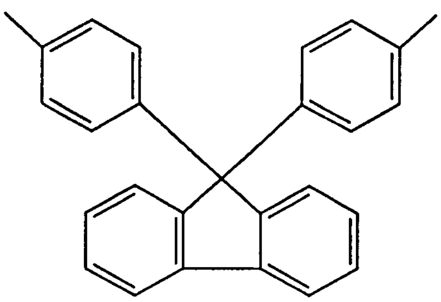 (VIIg), 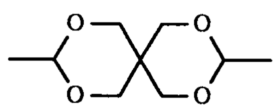 (VIIh) oder

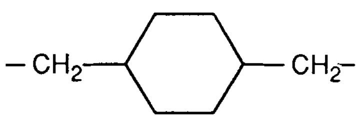 (VIIi),

worin $Y_1$ eine direkte Bindung, $-SO_2-$, -CO-, -S-, -SO-, $-CH_2-$, $-C(CH_3)_2-$,$-C(C_6H_5)_2-$, $-C(CH_3)(C_6H_5)-$ oder- $C(CF_3)_2-$ ist.

Insbesondere stellt $Z_1$ einen Rest der Formeln

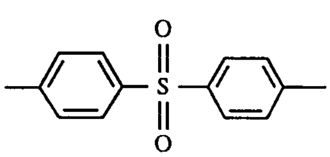 , 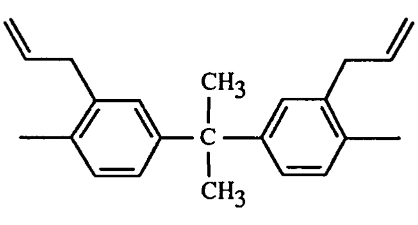 , 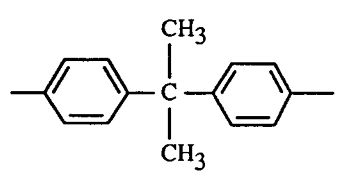

oder 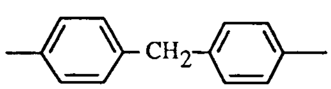

dar.

In den erfindungsgemässen Polyarylenether-Blockcopolymeren bedeutet $Z_2$ vorzugsweise einen Rest der Formeln VIIIa-VIIIj

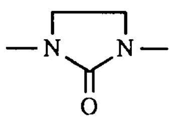 (VIIIa), 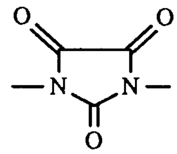 (VIIIb),

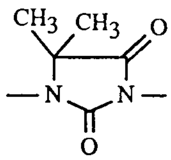 (VIIIc), 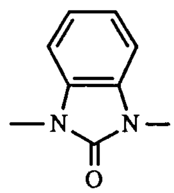 (VIIId),

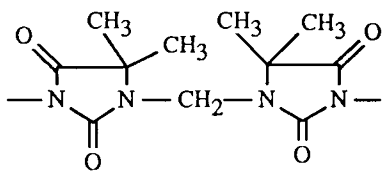 (VIIIe), 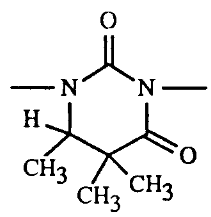 (VIIIf),

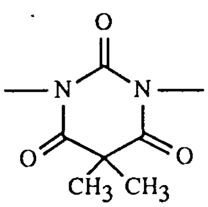 (VIIIg), 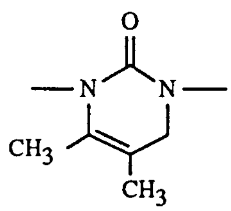 (VIIIh),

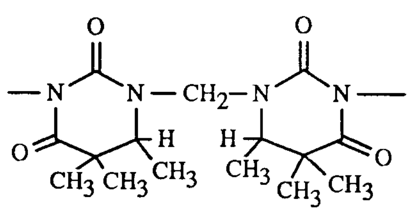 (VIIIi) oder 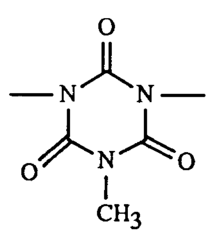 (VIIIj),

und $Z_3$ stellt vorzugsweise einen Rest der Formeln

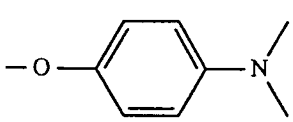, 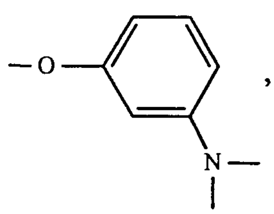, 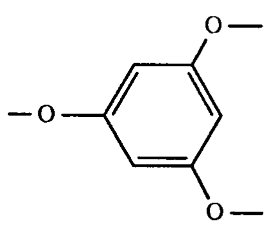 oder 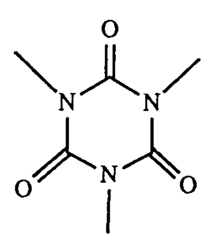

dar.

Die erfindungsgemässen Polyarylenether-Blockcopolymeren enthalten ferner vorzugsweise 10-90 Gew.-% der unter (a) angegebenen Polyarylenether-Blöcke und 90-10 Gew.-% der unter (b) angegebenen Polyarylenether-Blöcke. Besonders bevorzugt enthalten die Polyarylenether-Blockpolymeren 70-30 Gew.-%

der unter (a) angegebenen Blöcke und 30-70 Gew.-% der unter (b) angegebenen Polyarlyenether-Blöcke.

Ausserdem beträgt in den erfindungsgemässen Polyarylenether-Blockcopolymeren der Anteil an Struktureinheiten der Formeln III, IV oder V vorzugsweise 0,2-5 Gew.-%, bezogen auf das Blockcopolymer.

Die erfindungsgemässen modifizierten Polyarylenether-Blockcopolymere können beispielsweise hergestellt werden, indem man

(a) 5-95 Gew.-% hydroxylgruppenterminierter Polyarylenether mit einem Mn von etwa 1000-60000 und der Formel Ia

$$HO\text{-}Ar_1\text{-}O\text{-}(Ar_2\text{-}O\text{-}Ar_1\text{-}O)_x\text{-}Ar_2\text{-}O\text{-}Ar_1\text{-}OH \quad (Ia),$$

worin $Ar_1$ und $Ar_2$ die oben angegebene Bedeutung haben und x für eine Zahl von 4 bis 250 steht, und

(b) 95-5 Gew.-% von (a) verschiedener hydroxylgruppenterminierter Polyarylenether mit einem Mn von 1000 bis 60000 und der Formel II

$$HO\text{-}Ar_3\text{-}O\text{-}(Ar_4\text{-}O\text{-}Ar_3\text{-}O)_y\text{-}Ar_4\text{-}O\text{-}Ar_3\text{-}OH \quad (IIa),$$

worin $Ar_3$ und $Ar_4$ die oben angegebene Bedeutung haben und y für eine Zahl von 4 bis 250 steht, mit

(c) 0,2 bis 10 Gew.-% einer oder mehrerer Glycidylverbindungen der Formeln IIIa, IVa oder Va

(IIIa),

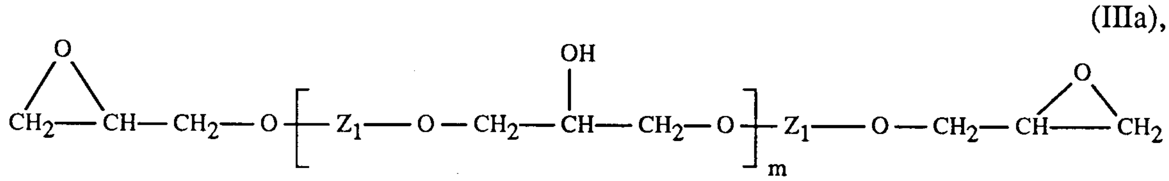

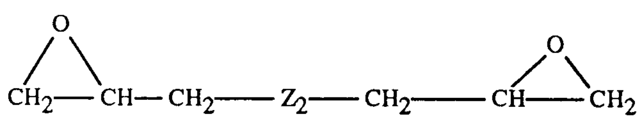

(IVa),

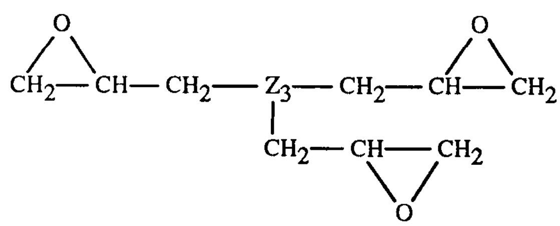

(Va),

worin $Z_1$, $Z_2$, $Z_3$ und m die oben angegebene Bedeutung haben, zu Polyarylenether-Blockcopolymeren umsetzt.

Die auf diese Weise erhaltenen Polyarylenether-Blockcopolymere zeichnen sich dadurch aus, dass in ihnen die jeweils eingesetzten Blocklängen nach der Kupplungsreaktion praktisch erhalten bleiben, das heisst, eine Randomerisierung durch zumindestens teilweisen Abbau der präpolymeren Ausgangsverbindungen kann vermieden werden.

Gegenstand der Erfindung ist somit auch ein Verfahren zur Herstellung von Polyarylenether-Blockpolymeren.

Die als Ausgangsverbindungen eingesetzten niedermolekularen hydroxylgruppenterminierten Polyarylenether der Formel Ia oder IIa (Präpolymere) besitzen vorzugsweise ein Mn von 2000 bis 30000, insbesondere von 4000 bis 20000.

Diese Präpolymeren lassen sich in bekannter Weise, beispielsweise durch Umsetzung von einer Dihydroxyverbindung der Formel Ib bzw. IIb

$HO\text{-}Ar_1\text{-}OH$ (Ib)

$HO-Ar_3-OH$ (IIb)

mit einer aromatischen Dihalogenverbindung der Formel Ic bzw. IIc

$Hal-Ar_2-Hal$ (Ic)

$Hal-Ar_4-Hal$ (IIc)

erhalten, worin $Ar_1$, $Ar_2$, $Ar_3$ und $Ar_4$ die gleiche Bedeutung wie in Formel I und II haben und Hal für ein Halogenatom, insbesondere ein Chlor- oder Fluoratom, steht.

Die Dihydroxyverbindungen der Formeln Ib und IIb werden dabei im allgemeinen im Ueberschuss vorgelegt, so dass hydroxylterminierte Präpolymere entstehen. Die Molverhältnisse von Dichlor-/Dihydroxyverbindungen werden in an sich bekannter Weise so gewählt, dass Präpolymere mit dem gewünschten Molekulargewicht erhalten werden.

Man kann allerdings auch die aromatischen Dihalogenverbindungen im Ueberschuss vorlegen und die entstandenen dihalogenterminierten Präpolymeren durch Behandlung mit einer Base, beispielsweise mit Natrium- oder Kaliumhydroxid, in die entsprechenden hydroxylterminierten Präpolymeren überführen.

Selbstverständlich lassen sich zur Herstellung der Präpolymeren auch Monomere einsetzen, die je ein Halogenatom und eine Hydroxylgruppe pro Molekül aufweisen.

Die Herstellung der Präpolymeren erfolgt in der Regel in Lösung. Dazu wählt man im allgemeinen ein Lösungsmittel aus, das beide Ausgangsstoffe und das entstehende Präpolymere zumindest teilweise löst. Beispiele dafür sind polare aprotische Lösungsmittel, wie Dimethylsulfoxid, N-Methylpyrrolidon, N,N-Dimethylacetamid, N,N'-Dimethylpropylenharnstoff, N-Cyclohexylpyrrolidon, N-Alkyl-Caprolactame oder bevorzugt Diphenylsulfon.

Die Umsetzung erfolgt vorzugsweise in Gegenwart einer Base, um den entstehenden Halogenwasserstoff zu neutralisieren. Beispielsweise werden NaOH oder KOH und vorzugsweise $Na_2CO_3$, $K_2CO_3$ oder Gemische von Alkali- bzw. Erdalkalimetallcarbonaten eingesetzt.

Die zur Modifizierung der Präpolymeren eingesetzten Diglycidylether der Formel IIIa, Diglycidylverbindungen der Formel IVa oder Triglycidylverbindungen der Formel Va sind an sich bekannt und teilweise im Handel erhältlich.

Beispiele für besonders bevorzugte Verbindungen der Formel IIIa sind die Diglycidylether auf Basis von Bisphenol F, Dihydroxydiphenylsulfon, Diallyl-Bisphenol A und insbesondere auf Basis von Bisphenol A.

Die Modifizierung der Präpolymeren kann in Lösung eines hochsiedenden inerten Lösungsmittels vorgenommen werden. Das Lösungsmittel wird so gewählt, dass beide Ausgangskomponenten und das Umsetzungsprodukt darin zumindest teilweise gelöst werden. Als hochsiedendes Lösungsmittel lässt sich beispielsweise Diphenylsulfon einsetzen. Im allgemeinen legt man ein Gemisch der Präpolymeren im gegebenenfalls aufgeschmolzenen Lösungsmittel vor und gibt anschliessend die Glycidylverbindung zu, die gegebenenfalls in einem inerten Lösungsmittel gelöst ist. Die Modifizierung kann in Anwesenheit oder in Abwesenheit weiterer Zusätze oder Katalysatoren durch Umsetzung von Phenol- oder Phenolatgruppen mit Epoxidgruppen erfolgen. Vorzugsweise werden die bei der Herstellung der Präpolymeren erhaltenen Reaktionsgemische gegebenenfalls nach Verdünnen mit inertem Lösungsmittel direkt für die Modifizierungsreaktion eingesetzt. Geeignete Katalysatoren für die Modifizierungsreaktion sind zum Beispiel Basen, die auch zur Herstellung der Präpolymeren eingesetzt werden. Die Reaktionstemperatur wird so gewählt, dass eine ausreichende Umsetzungsgeschwindigkeit gewährleistet ist. Typische Reaktionstemperaturen liegen zwischen 100 und 200 °C.

Vorzugsweise setzt man die hydroxylgruppenterminierten Polyarylenether der Formel Ia und IIa mit 0,5 bis 5 Gew.-% der Glycidylverbindungen der Formeln IIIa, IVa oder Va um.

Die thermoplastischen erfindungsgemässen Polyarylenether-Blockcopolymeren können in der für Thermoplaste üblichen Weise eingesetzt werden und z.B. zu Formkörpern oder Folien verarbeitet werden, oder als Matrixharze, Klebstoffe oder Ueberzugsmittel verwendet werden.

Vor der Verarbeitung der beispielsweise als Presspulver, Schmelze oder insbesondere als Lösung vorliegenden Blockcopolymeren können übliche Zusatzstoffe, wie beispielsweise Füllstoffe, Pigmente, Stabilisatoren oder Verstärkungsmittel, wie Kohlenstoff-, Bor-, Metall- oder Glasfasern, zugegeben werden. Die erfindungsgemässen Blockcopolymeren können auch zusammen mit anderen Thermoplasten oder Duromeren verarbeitet werden.

Vorzugsweise eignen sich die erfindungsgemässen Polyarylenether-Blockcopolymeren als Matrixharze für die Herstellung von Faserverbundsystemen, wobei man als Verstärkungsfasern die üblichen bei der

Verstärkung technischer Werkstoffe verwendeten Fasern einsetzen kann. Diese können organische oder anorganische Fasern, Naturfasern oder Synthesefasern sein, und als Faserbündel, als orientierte oder nichtorientierte Fasern oder als Endlosfasern vorliegen.

Eine weitere bevorzugte Anwendungsmöglichkeit für die erfindungsgemässen Polyarylenether-Blockcopolymere besteht in der Modifizierung anderer Kunststoffe. Diese können grundsätzlich Thermoplaste oder Duromere sein. Besondere Bedeutung erlangen solche Systeme als Matrixharze, welche zur Herstellung von Verbundbauteilen zum Einsatz gelangen.

Besonders hervorzuheben ist die unerwartet hohe Löslichkeit der erfindungsgemässen Blockcopolymeren in einer Reihe von herkömmlichen organischen Lösungsmitteln, wie in fluorierten oder chlorierten Kohlenwasserstoffen, und die sehr gute Stabilität dieser Lösungen. Beispiele für geeignete Lösungsmittel sind polare aprotische Lösungsmittel, wie N-Methylpyrrolidon, N,N-Dimethylacetamid, N,N-Dimethylformamid, Dimethylsulfoxid und Sulfolan, sowie chlorierte aliphatische Kohlenwasserstoffe, wie z.B. Methylenchlorid, 1,2-Dichlorethan und cyclische Ketone, wie z.B. Cyclohexanon und Cyclopentanon, oder auch cyclische Ether, wie z.B. 1,3-Dioxolan.

Die erfindungsgemässen Blockcopolymeren besitzen im Gegensatz zu den als Ausgangssubstanzen verwendeten Präpolymeren eine sehr gute Löslichkeit, beispielsweise in Methylenchlorid, und bilden über mehrere Tage stabile Lösungen. Sie lassen sich damit aus einer Lösung heraus verarbeiten, beispielsweise zu Filmen, oder in andere Systeme, beispielsweise Matrixharze, einbringen.

Die Erfindung betrifft daher auch eine Lösung enthaltend etwa 1 bis 75 Gew.%, vorzugsweise 5 bis 50 Gew.%, bezogen auf die Lösung, eines erfindungsgemässen Polyarylenether-Blockcopolymers gelöst in einem organischen Lösungsmittel.

Des weiteren betrifft die Erfindung die Verwendung der erfindungsgemässen Polyarylenether-Blockcopolymeren oder deren Lösungen zur Herstellung von Formstoffen, Beschichtungen, Folien oder Faserverbunden.

Die erfindungsgemäss modifizierten Blockcopolymeren weisen in der Regel überwiegend phenolische Endgruppen auf. Weitere spezifische Endgruppen können durch Folgereaktionen hergestellt werden. Beispielsweise können Alkoxy- bzw. Acyloxyendgruppen durch Reaktion eines hydroxylterminierten erfindungsgemässen Polymeren mit einem Alkylhalogenid bzw. mit einem Monocarbonsäurehalogenid erhalten werden. Die erfindungsgemässen Copolymeren sind im allgemeinen amorph oder teilkristallin.

Die in den folgenden Beispielen angegebenen reduzierten Viskositäten der Präpolymeren und Polyarylenether-Blockcopolymeren werden an 1 %igen Lösungen in Dimethylformamid (DMF) (1 g Polymeres in 100 ml DMF) gemessen.

Herstellung der niedermolekularen Polyarylenether (Präpolymere)

Beispiel A: 626 g (2,5 Mol) 4,4'-Dihydroxydiphenylsulfon, 703 g (2,45 Mol) 4,4'-Dichlordiphenylsulfon, 363 g (2,625 Mol) $K_2CO_3$ und 1400 g Diphenylsulfon werden in einen 10 Liter-Metallreaktor unter $N_2$-Spülung auf 180 °C erhitzt. Nach Erreichen von 180 °C Innentemperatur wird das Rohstoffgemisch 2 Stunden (h) gerührt. Das bei der Reaktion gebildete Kondensationswasser destilliert über einen absteigenden Kühler fortlaufend aus dem Reaktionsgemisch ab. Nach 2h bei 180 °C wird die Reaktionstemperatur innerhalb von weiteren 2 h stufenweise auf 260 °C erhöht. Nach Erreichen von 260 °C wird die Temperatur 4 h konstant beibehalten. Das Reaktionsgemisch wird danach über ein Bodenventil dem Reaktionskessel entnommen und nach Abkühlen grob gemahlen.

Ein Teil des so hergestellten Polymeren wird durch Extraktion (3 mal mit Aceton/Wasser (80/20); 1 mal mit Wasser) aufgearbeitet. Zum Freisetzen der OH-Endgruppen wird bei der Wasserreaktion Essigsäure zugesetzt. Das Polyethersulfon wird anschliessend bei 110 °C im Vakuum getrocknet. Es weist eine reduzierte Viskosität ($\eta_{red}$) von 0,33 dl/g und einen aromatischen OH-Endgruppengehalt von 110 µVal/g auf.

Beispiel B: 105 g (0,50 Mol) 4,4'-Dihydroxybenzophenon, 140,7 g (0,49 Mol) 4,4'-Dichlordiphenylsulfon, 72,6 g (0,525 Mol) Kaliumcarbonat und 245,6 g Diphenylsulfon werden analog Beispiel A in einem 1 Liter-Metallreaktor umgesetzt (Reaktionsbedingungen: 180 °C/2 h; 180-260 °C/2h; 260 °C/3,75 h) und aufgearbeitet. Das resultierende Polymere weist eine $\eta_{red}$ von 0,30 dl/g auf.

Beispiel C: 93,1 g (0,50 Mol) Phenylhydrochinon, 140,7 g (0,49 Mol) 4,4'-Dichlordiphenylsulfon, 72,6 g (0,525 Mol) Kaliumcarbonat und 233,8 g Diphenylsulfon werden analog Beispiel A in einem 1 Liter-Metallreaktor umgesetzt (Reaktionsbedingungen: 180 °C/2 h; 180-260 °C/2 h; 260 °C/3 h) und anschliessend aufgearbeitet. Das resultierende Polymere weist eine $\eta_{red}$ von 0,26 dl/g auf.

Beispiel D: 93,1 g (0,50 Mol) 4,4'-Dihydroxybiphenyl, 140,7 g (0,49 Mol) 4,4'-Dichlordiphenylsulfon, 72,6 g (0,525 Mol) Kaliumcarbonat und 233,8 g Diphenylsulfon werden analog Beispiel A in einem 1 Liter-Metallreaktor umgesetzt (Reaktionsbedingungen: 180 ° C/2 h; 180-260 ° C/2h; 260 ° C/4h) und anschliessend aufgearbeitet. Das resultierende Polymere weist eine $\eta_{red}$ von 0,22 dl/g auf.

Beispiel E: 93,1 g (0,50 Mol) 4,4'-Dihydroxybiphenyl, 129,22 g (0,45 Mol) 4,4'-Dichlordiphenylsulfon, 72,56 g (0,525 Mol) Kaliumcarbonat und 222,32 g Diphenylsulfon werden analog Beispiel A in einem 1 Liter-Metallreaktor umgesetzt (Reaktionsbedingungen: 180 ° C/2 h, 180-270 ° C/2 h, 270 ° C/2,45 h) und aufgearbeitet. Das resultierende Polymere weist eine $\eta_{red}$ von 0,24 dl/g auf.

Herstellung von modifizierten Polyarylenether-Blockcopolymeren:

Beispiel 1: 15 g des nach Beispiel B hergestellten Reaktionsgemisches, enthaltend 5,91 g niedermolekularen Polyarylenether, und 29,4 g eines nach Beispiel A hergestellten Reaktionsgemisches, enthaltend 11,81 g Polyarylenether, werden in einem Glasgefäss unter $N_2$ bei 150 ° C/2 h vollständig aufgeschmolzen. Anschliessend werden 0,34g Bisphenol A-diglycidylether (Epoxidäquivalent 175,5-179 g/Val; 1,92 Gew.-%, bezogen auf die gesamte Menge an Polyarylenether) zur Schmelze zugetropft. Die Reaktion wird 2 h nach der vollständigen Zugabe des Diglycidylethers beendet.

Das Reaktionsgemisch wird aus dem Glasgefäss ausgetragen, gemahlen und dann durch Extraktion (3 mal mit Aceton/Wasser (80/20); 1-mal mit Wasser) aufgearbeitet. Zum Freisetzen der OH-Endgruppen wird bei der Wasserextraktion Essigsäure zugesetzt. Das so erzielte modifizierte Polyarylenether-Blockcopolymere weist eine $\eta_{red}$ von 0,48 dl/g auf.

Beispiel 2: 22,5 g des nach Beispiel B hergestellten Reaktionsgemisches, enthaltend 9,0 g niedermolekularen Polyarylenether, und 22,5 g des nach Beispiel A hergestellten Reaktionsgemisches, enthaltend 9,0 g Polyarylenether, werden mit 0,36g Bisphenol A-diglycidylether (Epoxidäquivalent 175,5-179 g/Val; 2,0 Gew.-%, bezogen auf die gesamte Menge an Polyarylenether) in einem Glasgefäss analog Beispiel 1 umgesetzt. Das modifizierte Polyarylenether-Blockcopolymer weist eine $\eta_{red}$ von 0,44 dl/g auf.

Beispiel 3: 22,5 g des nach Beispiel C hergestellten Reaktionsgemisches, enthaltend 8,9 g niedermolekularen Polyarylenether, und 22,5 g des nach Beispiel A hergestellten Reaktionsgemisches, enthaltend 9,0 g Polyarylenether, werden mit 0,27 g Bisphenol A-diglycidylether (Epoxidäquivalent 175,5-179 g/Val; 1,5 Gew.-%, bezogen auf die gesamte Menge an Polyarylenether) in einem Glasgefäss analog Beispiel 1 umgesetzt. Das modifizierte Polyarylenether-Blockcopolymer weist eine $\eta_{red}$ von 0,45 dl/g auf.

Beispiel 4: 30 g des nach Beispiel C hergestellten Reaktionsgemisches, enthaltend 11,6 g niedermolekularen Polyarylenether, und 15 g des nach Beispiel A hergestellten Reaktionsgemisches, enthaltend 6,0 g Polyarylenether, werden mit 0,35 g Bisphenol A-diglycidylether (Epoxidäquivalent 175,5-179 g/Val; 2,0 Gew.-%, bezogen auf die gesamte Menge an Polyarylenether) in einem Glasgefäss analog Beispiel 1 umgesetzt. Das modifizierte Polyarylenether-Blockcopolymer weist eine $\eta_{red}$ von 0,59 dl/g auf.

Beispiel 5: 30 g des nach Beispiel D hergestellten Reaktionsgemisches, enthaltend 11,78 g niedermolekularen Polyarylenether, und 15 g des nach Beispiel A hergestellten Reaktionsgemisches, enthaltend 6,03 g Polyarylenether, werden mit 0,32 g Bisphenol A-diglycidylether (Epoxidäquivalent 175,5-179 g/Val; 1,80 Gew.-%, bezogen auf die gesamte Menge an Polyarylenether) in einem Glasgefäss analog Beispiel 1 umgesetzt. Das modifizierte Polyarylenether-Blockcopolymer weist eine $\eta_{red}$ von 0,67 dl/g auf.

Beispiel 6: 24,9 g des nach Beispiel A hergestellten Reaktionsgemisches, enthaltend 10 g niedermolekularen Polyarylenether, und 25,65 g des nach Beispiel E hergestellten Reaktionsgemisches, enthaltend 10 g niedermolekularen Polyarylenether, werden mit 0,50 g Dihydroxydiphenylsulfondiglycidylether-(Epoxyidäquivalent 188,7 g/Val; 2,5 Gew.-%, bezogen auf die gesamte Menge an Polyarylenether) in einem Glasgefäss analog Beispiel 1 umgesetzt. Das modifizierte Polyarylenether-Blockcopolymer weist eine $\eta_{red}$ von 0,36 dl/g auf.

Beispiel 7: 24,9 g des nach Beispiel A hergestellten Reaktionsgemisches, enthaltend 10 g niedermolekularen Polyarylenether, und 25,7 g des nach Beispiel E hergestellten Reaktionsgemisches, enthaltend 10 g niedermolekularen Polyarylenether, werden mit 0,20 g N,N,O-Triglycidyl-p-aminophenol (Epoxidäquivalent 95-107 g/Val; 1,0 Gew.-%, bezogen auf die gesamte Menge an Polyarylenether) in einem Glasgefäss analog Beispiel 1 umsetzt. Das modifizierte Polyarylenether-Blockcopolymer weist eine $\eta_{red}$ von 0,37 dl/g auf.

Beispiel 8: Das nach Beispiel 1 synthetisierte Polymere wird als Lösung in Methylenchlorid, enthaltend 10 Gewichtsteile Polymeres, zu einer Mischung, bestehend aus 50 Gewichtsteilen N,N,N',N'-Tetraglycidyldiaminodiphenylmethan und 50 Gewichtsteilen N,N,O-Triglycidyl-p-aminophenol, gegeben und das Lösungsmittel im Vakuum entfernt. Nach Zugabe von 50 Gewichtsteilen-p-Diaminodiphenylsulfon wird die Lösung 2 Stunden bie 160 ° C sowie 2 Stunden bei 210 ° C ausgehärtet. Aus einer so hergestellten Platte werden Prüfkörper geschnitten und die Biegefestigkeit zu 147 $N/mm^2$ und die Randfaserdehnung zu 4,7 % bestimmt.

Herstellung von modifizierten Polyarylenether-Blockcopolymeren

| Bsp. Nr. | Polyarylenetherblöcke nach Beispiel | Verhältnis der Blöcke | $\eta_{red}$ 1) (dl/g) der Blöcke | $T_g$ (DSC) der Blöcke [°C] | Löslichkeit 5 Gew.-% in $CH_2Cl_2$ der Blöcke | Anteil Epoxidharz (Gew.-%) | modifiziertes Polyarylenether-Blockcopolymer $\eta_{red}$ 1) (dl/g) | $T_g$ (DSC) 2) [°C] | Löslichkeit 10 Gew.-% in $CH_2Cl_2$ | Stabilität der Lösung (h) 3) |
|---|---|---|---|---|---|---|---|---|---|---|
| 1 | B/A | 1/2 | 0,30/0,33 | 202/222 | instab. Lsg. / instab. Lsg. | 1,92 | 0,48 | 212 | klar löslich | > 50 |
| 2 | B/A | 1/1 | 0,30/0,33 | 202/222 | instab. Lsg. / instab. Lsg. | 2,00 | 0,50 | 208 | klar löslich | > 50 |
| 3 | C/A | 1/1 | 0,26/0,33 | 182/222 | stab. Lsg. / instab. Lsg. | 1,50 | 0,45 | 193 | klar löslich | > 50 |
| 4 | C/A | 2/1 | 0,26/0,33 | 182/222 | stab. Lsg. / instab. Lsg. | 2,00 | 0,59 | 191 | klar löslich | > 50 |
| 5 | D/A | 2/1 | 0,22/0,33 | 195/222 | instab. Lsg. / instab. Lsg. | 1,8 | 0,67 | 211 | klar löslich | > 50 |
| 6 | E/A | 1/1 | 0,24/0,33 | 203/222 | instab. Lsg. / instab. Lsg. | 2,5 | 0,36 | 218 | klarlöslich | > 10 |
| 7 | E/A | 1/1 | 0,24/0,33 | 203/222 | instab. Lsg. / instab. Lsg. | 1,0 | 0,37 | 205 | klarlöslich | > 10 |

1) 1 g Polymeres in 100 ml DMF
2) DSC = Differential Scanning Calorimetry
3) Die hergestellte Lösung bleibt über die angegebene Zeit stabil, d.h., es erfolgt keine Trübung, Gelbildung oder Ausfallen des Polymeren.

## Patentansprüche

1. Mit Di- oder Triglycidylverbindungen modifizierte Polyarylenether-Blockcopolymere mit einer reduzierten Viskosität von 0,2 bis 1,8 dl/g, gemessen an einer 1 %igen Lösung in Dimethylformamid, enthaltend

   (a) 5-95 Gew.-% Polyarylenether-Blöcke mit numerischen Molekulargewichten (Mn) von 1000-60000 und gleichen oder verschiedenen wiederkehrenden Struktureinheiten der Formel I

$-Ar_1-O-Ar_2-O-$ (I),

(b) 95-5 Gew.-% von (a) verschiedener Polyarylenether-Blöcke mit Mn von 1000-60000 und gleichen, verschiedenen oder gleichen und verschiedenen wiederkehrenden Struktureinheiten der Formel II

$-Ar_3-O-Ar_4-O-$ (II) und

(c) 0,2-10 Gew.-% gleicher oder verschiedener Struktureinheiten der Formel III, IV oder V

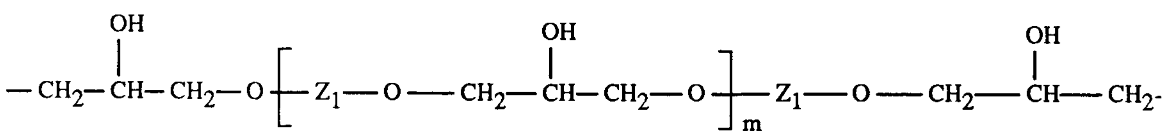

(III),

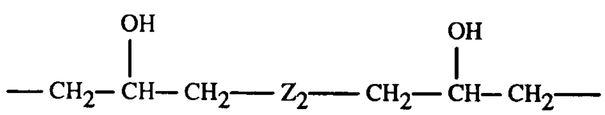

(IV) oder

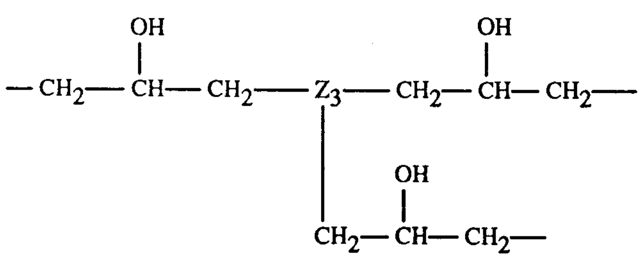

(V),

worin $Ar_1$, $Ar_2$, $Ar_3$ und $Ar_4$ unabhängig voneinander je einen zweiwertigen carbocyclisch-aromatischen Restbedeuten, $Z_1$ ein zweiwertiger Rest einer cycloaliphatischen, aromatischen oder araliphatischen Dihydroxyverbindung nach dem Entfernen der beiden Hydroxylgruppen ist, m Null oder eine Zahl von 1 bis etwa 10 bedeutet, $Z_2$ ein zweiwertiger Rest einer cycloaliphatischen, aromatischen oder araliphatischen disekundären Aminoverbindung nach dem Entfernen der beiden N-Wasserstoffatome ist, und $Z_3$ einen dreiwertigen Rest einer cycloaliphatischen, aromatischen oder araliphatischen Verbindung mit Hydroxy- und/oder Aminogruppen nach dem Entfernen der Hydroxy-und/oder Aminowasserstoffatome darstellt, wobei die Reste $Ar_1$, $Ar_2$, $Ar_3$, $Ar_4$, $Z_1$, $Z_2$ und $Z_3$ unsubstituiert oder mit ein bis vier $C_1$-$C_6$-Alkylgruppen, $C_3$-$C_{10}$-Alkenylgruppen, Phenylgruppen oder Halogenatomen substituiert sein können und in den Resten $Z_1$, $Z_2$ und $Z_3$ ein, zwei, drei oder vier Ringkohlenstoffatome durch Sauerstoff-, Schwefel- und/oder Stickstoffatome ersetzt sein können und wobei die Summe der Polyarylenether-Blöcke (a) und (b) und der Struktureinheiten (c) zusammen 100 Gew.-% beträgt.

**2.** Blockcopolymere gemäss Anspruch 1, dadurch gekennzeichnet, dass $Ar_1$ und $Ar_3$ unabhängig voneinander je einen Rest der Formeln VIa bis VIh

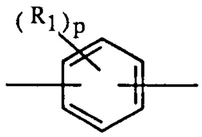 (VIa), 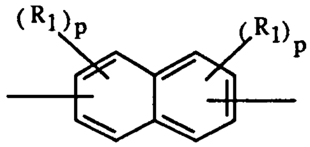 (VIb),

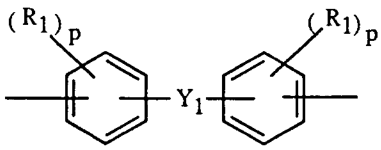 (VIc),

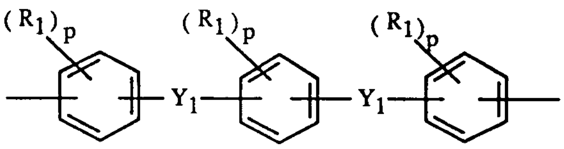 (VId),

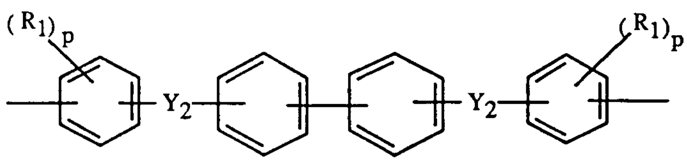 (VIe),

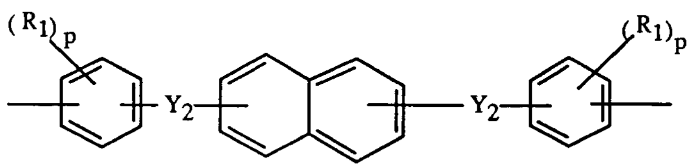 (VIf),

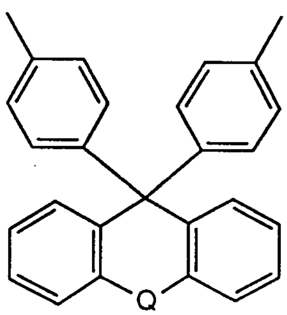 (VIg) oder 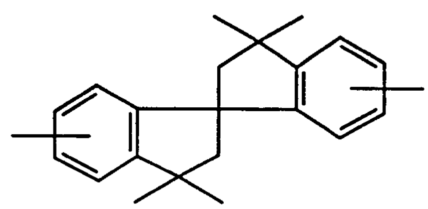 (VIh),

worin $R_1$ ein $C_1$-$C_6$-Alkyl, $C_3$-$C_{10}$-Alkenyl, Phenyl oder Halogen bedeutet, p eine ganze Zahl von Null bis 4 ist, $Y_1$ eine direkte Bindung, $-SO_2-$, -CO-, -S-,-SO-, $-CH_2-$, $-C(CH_3)_2-$, $-C(C_6H_5)_2-$, $-C(CH_3)(C_6H_5)-$ oder $-C(CF_3)_2-$ ist, $Y_2$ -CO-, - $SO_2$- oder -S- ist und Q für $-CH_2-$, -O-, -CO- oder eine direkte Bindung steht.

**3.** Blockcopolymere gemäss Anspruch 1, dadurch gekennzeichnet, dass $Ar_1$ und $Ar_3$ unabhängig voneinander je einen Rest der Formeln

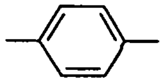, 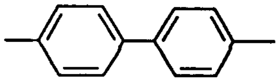, 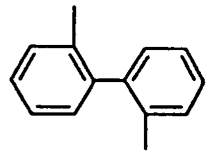, 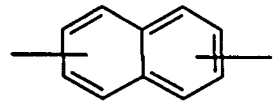,

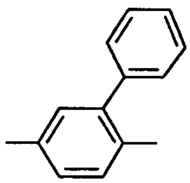, 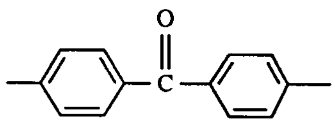, 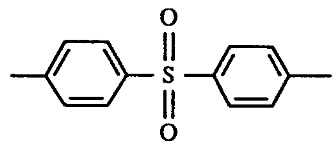,

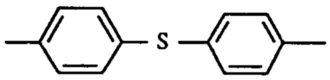, 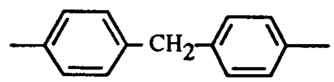, 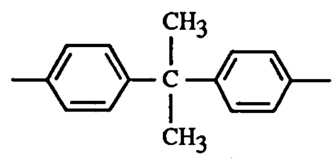 oder

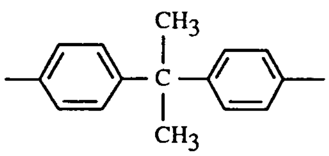

bedeuten.

4. Blockcopolymere gemäss Anspruch 1, dadurch gekennzeichnet, dass $Ar_2$ und $Ar_4$ unabhängig voneinander je einen Rest der Formeln VIi-VIm

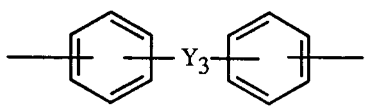 (VIi),

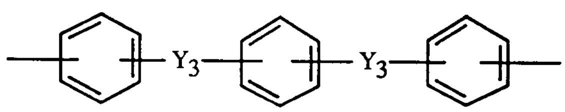 (VIk),

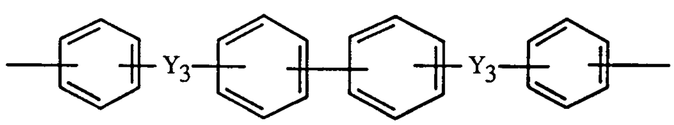 (VIl)

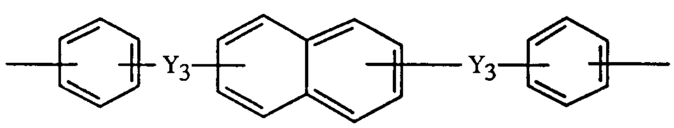 (VIm) oder

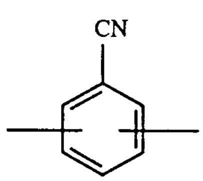 (VIn)

darstellen, worin $Y_3$ -CO-,-$SO_2$- oder -SO- ist.

**5.** Blockcopolymere gemäss Anspruch 1, dadurch gekennzeichnet, dass $Ar_2$ und $Ar_4$ unabhängig je einen Rest der Formeln

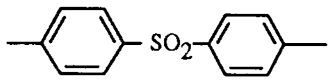 oder 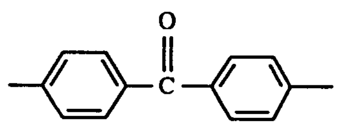

bedeuten.

**6.** Blockcopolymere gemäss Anspruch 1, dadurch gekennzeichnet, dass $Ar_2$ und $Ar_4$ einen Rest der Formel

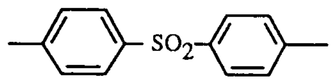

bedeuten.

**7.** Blockcopolymere gemäss Anspruch 1, dadurch gekennzeichnet, dass $Z_1$ ein Rest der Formeln VIIa bis VIIi;

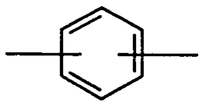 (VIIa), 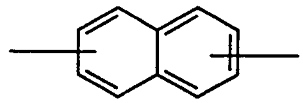 (VIIb),

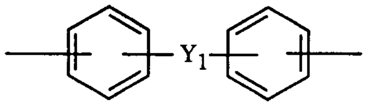 (VIIc), 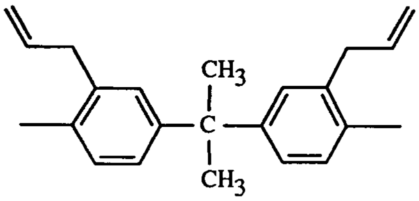 (VIId),

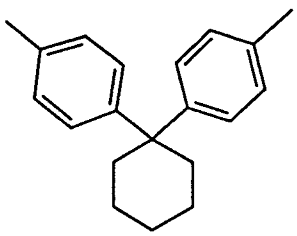 (VIIe), 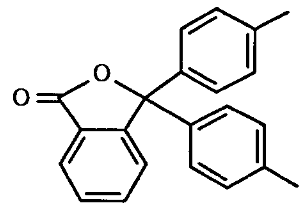 (VIIf),

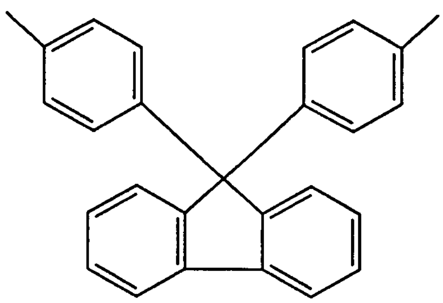 (VIIg), 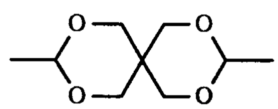 (VIIh) oder

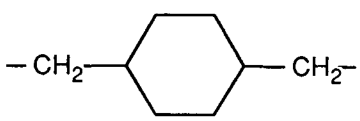 (VIIi),

ist, worin $Y_1$ die in Anspruch 2 definierte Bedeutung besitzt.

**8.** Blockcopolymere gemäss Anspruch 1, dadurch gekennzeichnet, dass $Z_1$ einen Rest der Formeln

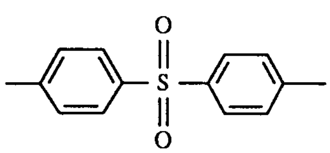 , 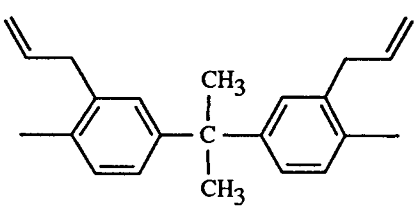 , 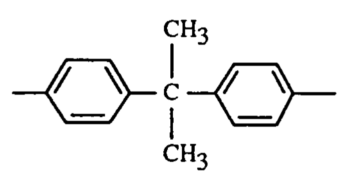

oder 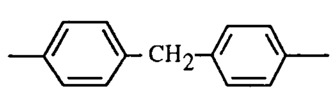

darstellt.

9. Blockcopolymere gemäss Anspruch 1, dadurch gekennzeichnet, dass $Z_2$ ein Rest der Formeln VIIIa-VIIIj

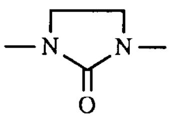 (VIIIa), 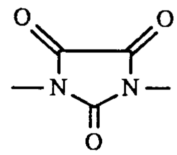 (VIIIb),

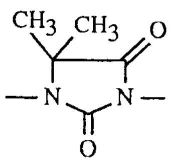 (VIIIc), 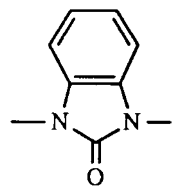 (VIIId),

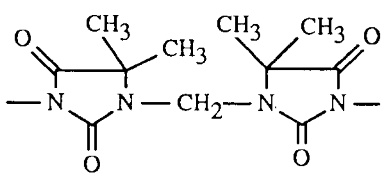 (VIIIe), 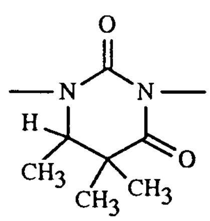 (VIIIf),

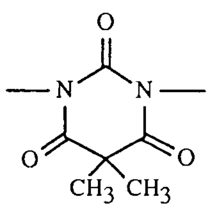 (VIIIg), 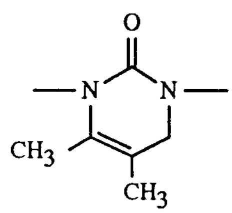 (VIIIh),

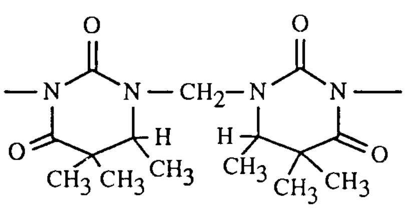 (VIIIi) oder 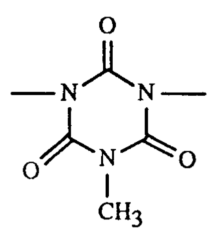 (VIIIj) ist.

10. Blockcopolymere gemäss Anspruch 1, dadurch gekennzeichnet, dass $Z_3$ einen Rest der Formeln

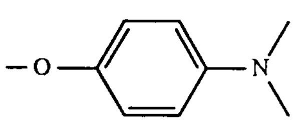 , 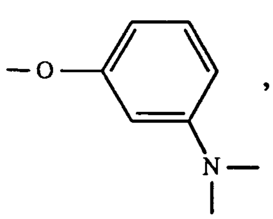 , 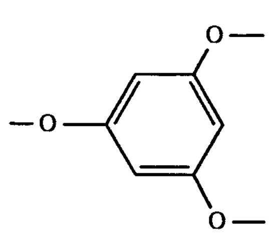 oder 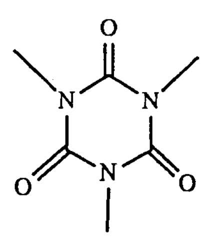

darstellt.

**11.** Blockcopolymere gemäss Anspruch 1, dadurch gekennzeichnet, dass der Anteil an Struktureinheiten der Formeln III, IV oder V 0,2-5 Gew.-%, bezogen auf das Blockcopolymere, beträgt.

**12.** Verfahren zur Herstellung von modifizierten Polyarylenether-Blockcopolymeren gemäss Anspruch 1, dadurch gekennzeichnet, dass man

(a) 5-95 Gew.-% hydroxylgruppenterminierter Polyarylenether mit einem Mn von 1000-60000 und der Formel Ia

$$HO\text{-}Ar_1\text{-}O\text{-}(Ar_2\text{-}O\text{-}Ar_1\text{-}O)_x\text{-}Ar_2\text{-}O\text{-}Ar_1\text{-}OH \qquad \text{(Ia),}$$

worin $Ar_1$ und $Ar_2$ die gleiche Bedeutung wie im Anspruch 1 haben und x für eine Zahl von 4 bis 250 steht, und

(b) 95-5 Gew.-% von (a) verschiedener hydroxylgruppenterminierter Polyarylenether mit einem Mn von 1000 bis 60000 und der Formel II

$$HO\text{-}Ar_3\text{-}O\text{-}(Ar_4\text{-}O\text{-}Ar_3\text{-}O)_y\text{-}Ar_4\text{-}O\text{-}Ar_3\text{-}OH \qquad \text{(IIa),}$$

worin $Ar_3$ und $Ar_4$ die gleiche Bedeutung wie im Anspruch 1 haben und y für eine Zahl von 4 bis 250 steht, mit (c) 0,2 bis 10 Gew.-% einer oder mehrerer Glycidylverbindungen der Formeln IIIa, IVa oder Va

(IIIa)

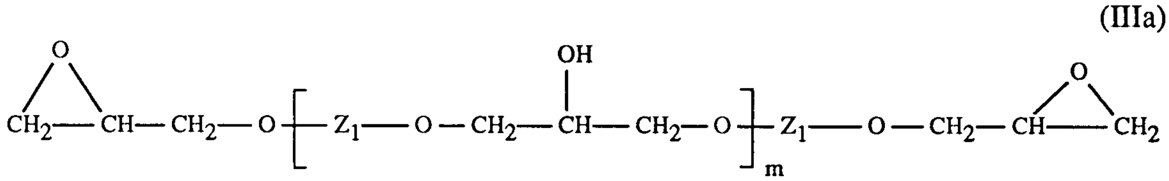

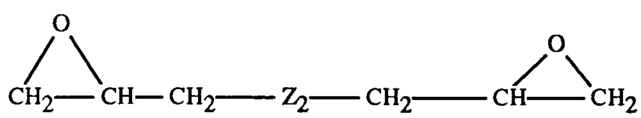

(IVa),

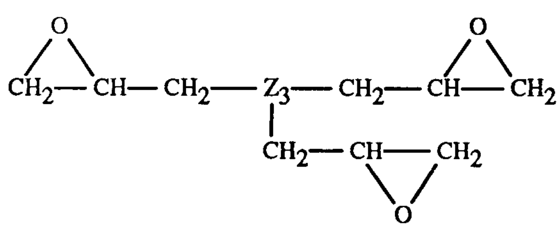

(Va),

worin $Z_1$, $Z_2$, $Z_3$ und m die gleiche Bedeutung wie im Anspruch 1 haben, zu Polyarylenether-Blockcopolymeren umsetzt.

**13.** Lösung enthaltend etwa 1 bis 75 Gew.-%, bezogen auf die Lösung, eines Polyarylenether-Blockcopolymeren gemäss Anspruch 1 gelöst in einem organischen Lösungsmittel.

**14.** Verwendung der Polymere gemäss Anspruch 1 zum Modifzieren von thermoplastischen und duromeren Matrixharzen.

**Patentansprüche für folgenden Vertragsstaat : ES**

**1.** Verfahren zur Herstellung von mit Di- oder Triglycidylverbindungen modifiziertem Polyarylenether-Blockcopolymeren mit einer reduzierten Viskosität von 0,2 bis 1,8 dl/g, gemessen an einer 1 %igen Lösung in Dimethylformamid, enthaltend

(a) 5-95 Gew.-% Polyarylenether-Blöcke mit numerischen Molekulargewichten (Mn) von 1000-60000 und gleichen oder verschiedenen wiederkehrenden Struktureinheiten der Formel I

$-Ar_1-O-Ar_2-O-$ (I),

(b) 95-5 Gew.-% von (a) verschiedener Polyarylenether-Blöcke mit Mn von 1000-60000 und gleichen, verschiedenen oder gleichen und verschiedenen wiederkehrenden Struktureinheiten der Formel II

$-Ar_3-O-Ar_4-O-$ (II) und

(c) 0,2-10 Gew.-% gleicher oder verschiedener Struktureinheiten der Formel III, IV oder V

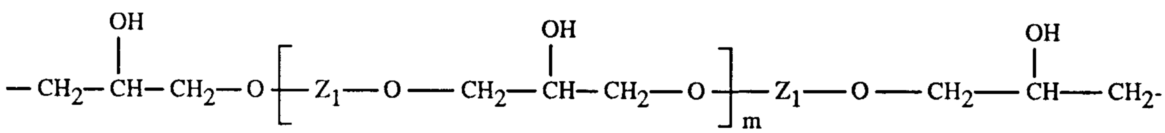

(III),

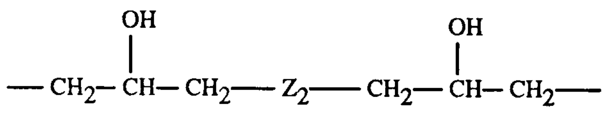

(IV) oder

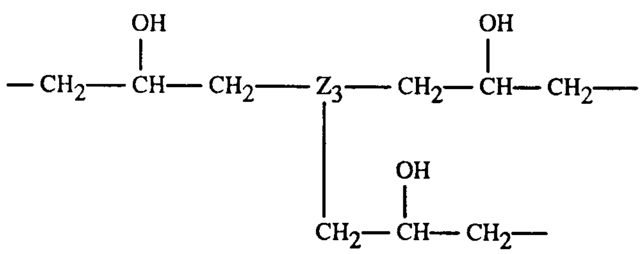

(V),

worin $Ar_1$, $Ar_2$, $Ar_3$ und $Ar_4$ unabhängig voneinander je einen zweiwertigen carbocyclisch-aromatischen Restbedeuten, $Z_1$ ein zweiwertiger Rest einer cycloaliphatischen, aromatischen oder araliphatischen Dihydroxyverbindung nach dem Entfernen der beiden Hydroxylgruppen ist, m Null oder eine Zahl von 1 bis etwa 10 bedeutet, $Z_2$ ein zweiwertiger Rest einer cycloaliphatischen, aromatischen oder araliphatischen disekundären Aminoverbindung nach dem Entfernen der beiden N-Wasserstoffatome ist, und $Z_3$ einen dreiwertigen Rest einer cycloaliphatischen, aromatischen oder araliphatischen Verbindung mit Hydroxy- und/oder Aminogruppen nach dem Entfernen der Hydroxy-und/oder Aminowasserstoffatome darstellt, wobei die Reste $Ar_1$, $Ar_2$, $Ar_3$, $Ar_4$, $Z_1$, $Z_2$ und $Z_3$ unsubstituiert oder mit ein bis vier $C_1$-$C_6$-Alkylgruppen, $C_3$-$C_{10}$-Alkenylgruppen, Phenylgruppen oder Halogenatomen substituiert sein können und in den Resten $Z_1$, $Z_2$ und $Z_3$ ein, zwei, drei oder vier Ringkohlenstoffatome durch Sauerstoff-, Schwefel- und/oder Stickstoffatome ersetzt sein können und wobei die Summe der Polyarylenether-Blöcke (a) und (b) und der Struktureinheiten (c) zusammen 100 Gew.-% beträgt, dadurch gekennzeichnet, dass man

(a) 5-95 Gew.-% Polyarylenether-Blöcke mit numerischen Molekulargewichten (Mn) von 1000-60000 und gleichen oder verschiedenen wiederkehrenden Struktureinheiten der Formel I

$$HO\text{-}Ar_1\text{-}O\text{-}(Ar_2\text{-}O\text{-}Ar_1\text{-}O)_x\text{-}Ar_2\text{-}O\text{-}Ar_1\text{-}OH \qquad (Ia),$$

worin $Ar_1$ und $Ar_2$ die gleiche Bedeutung wie in Formel I haben und x für eine Zahl von 4 bis 250 steht, und

(b) 95-5 Gew.-% von (a) verschiedener hydroxylgruppenterminierter Polyarylenether mit einem Mn von 1000 bis 60000 und der Formel II

$$HO\text{-}Ar_3\text{-}O\text{-}(Ar_4\text{-}O\text{-}Ar_3\text{-}O)_y\text{-}Ar_4\text{-}O\text{-}Ar_3\text{-}OH \qquad (IIa),$$

worin $Ar_3$ und $Ar_4$ die gleiche Bedeutung wie in Formel II haben und y für eine Zahl von 4 bis 250 steht, mit (c) 0,2 bis 10 Gew.-% einer oder mehrerer Glycidylverbindungen der Formeln IIIa, IVa oder Va

(IIIa)

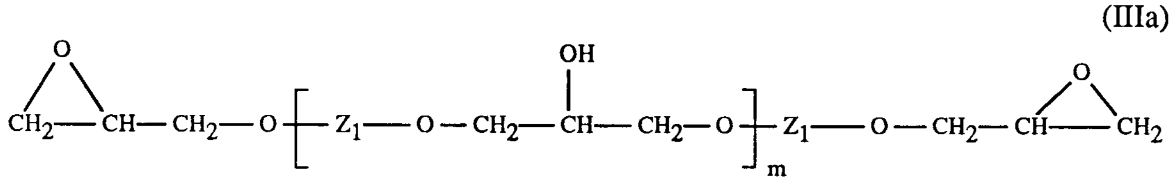

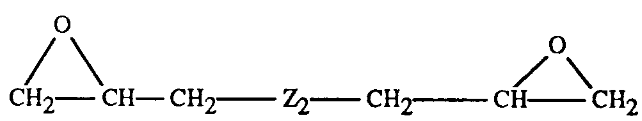

(IVa),

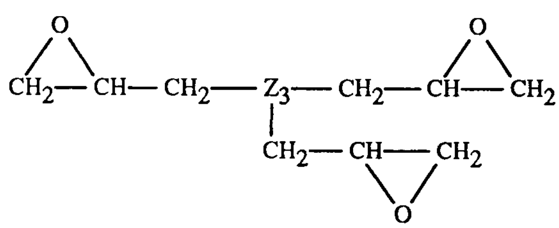

(Va),

worin $Z_1$, $Z_2$, $Z_3$ und m die gleiche Bedeutung wie in Formeln III bis V haben, zu Polyarylenether-Blockcopolymeren umsetzt.

**2.** Verfahren gemäss Anspruch 1, dadurch gekennzeichnet, dass man die Umsetzung zwischen 100 °C bis 200 °C vornimmt.